(19) Europäisches Patentamt
European Patent Office
Office européen des brevets

(11) **EP 4 729 570 A1**

(12) **EUROPEAN PATENT APPLICATION**
published in accordance with Art. 153(4) EPC

(43) Date of publication:
**22.04.2026 Bulletin 2026/17**

(21) Application number: **24898208.4**

(22) Date of filing: **29.11.2024**

(51) International Patent Classification (IPC):
*C08J 9/20* (2006.01)     *C08J 3/24* (2006.01)
*C08J 3/12* (2006.01)     *C08J 9/14* (2006.01)
*C08F 2/44* (2006.01)     *C08F 20/06* (2006.01)
*C08K 9/10* (2006.01)     *C08K 5/1515* (2006.01)

(52) Cooperative Patent Classification (CPC):
**C08F 2/44; C08F 20/06; C08J 3/12; C08J 3/24;
C08J 9/14; C08J 9/20; C08K 5/1515; C08K 9/10**

(86) International application number:
**PCT/KR2024/019298**

(87) International publication number:
**WO 2025/116614 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.11.2023 KR 20230169689
28.11.2024 KR 20240174002**

(71) Applicant: **LG Chem, Ltd.
Seoul 07336 (KR)**

(72) Inventors:
• **KIM, Kihoon
Daejeon 34122 (KR)**
• **DO, Yun Kyung
Daejeon 34122 (KR)**
• **NAM, Hyemi
Daejeon 34122 (KR)**
• **LEE, Hyemin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **METHOD FOR PREPARING SUPERABSORBENT POLYMER**

(57)     Provided is a method of preparing a superabsorbent polymer, more particularly, a method of preparing a superabsorbent polymer having a superior absorption rate while showing minimal generation of fine particles as a technology for securing an absorption rate using an increased amount of a chemical blowing agent in a polymerization step, and at the same time, for optimally controlling process conditions to prevent loss of a chemical pore structure due to the increased amount of the chemical blowing agent in subsequent chopping and pulverization processes.

[Fig. 1]

Comparative Example 8     Example 1     Example 3

**Description**

[Technical Field]

Cross-reference to Related Application

The present application is based on, and claims priority from, Korean Patent Application Nos. 10-2023-0169689 and 10-2024-0174002, filed on November 29, 2023 and November 28, 2024, respectively, the disclosures of which are hereby incorporated by reference herein in their entirety.

The present invention relates to a method of preparing a superabsorbent polymer, and relates to a method of preparing a superabsorbent polymer having a superior absorption rate while showing minimal generation of fine particles.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary items, and they are now being widely used for water retaining soil products for gardening, water stop materials for the civil engineering and construction, sheets for raising seedling, fresh-keeping agents for food distribution fields, materials for poultices, or the like.

In most cases, these superabsorbent polymers have been widely used in the field of hygienic materials such as diapers or sanitary pads, etc. Inside the hygienic materials, the superabsorbent polymer is generally distributed throughout pulp. However, recent efforts have been continuously made to provide hygienic materials such as diapers having a thinner thickness, etc., and as part of that, diapers having a reduced content of pulp, and furthermore, diapers having no pulp, so-called pulpless diapers are actively under development.

As described above, such a hygienic material having a reduced content of pulp or having no pulp includes the superabsorbent polymer at a relatively high ratio, and the superabsorbent polymer particles are inevitably included as multiple layers in the hygienic materials. In order to allow the whole superabsorbent polymer particles included as multiple layers to more efficiently absorb a large amount of liquid such as urine, etc., it is necessary that the superabsorbent polymer basically exhibits high absorption performance as well as high absorption rate.

Meanwhile, the most common method of improving these absorption properties is to increase the surface area of the superabsorbent polymer by forming a porous structure inside the superabsorbent polymer. In order to increase the surface area of the superabsorbent polymer, a method of forming a porous structure in base polymer particles by progressing crosslinking polymerization while incorporating a blowing agent in a monomer composition is generally adopted.

However, the excessive use of blowing agent to form a desired degree of the porous structure involves disadvantages of deterioration in overall physical properties of the superabsorbent polymer, for example, surface tension, permeability, or bulk density, etc., particularly, loss of the porous structure during a pulverization process after polymerization, and increased generation of fine particles.

Therefore, there is a continuous demand for the development of technology capable of improving absorption properties of the superabsorbent polymer while improving the problems due to the use of blowing agent.

[Disclosure]

[Technical Problem]

Accordingly, there is provided a method of preparing a superabsorbent polymer having a superior absorption rate while showing minimal generation of fine particles as a technology for securing an absorption rate using an increased amount of a chemical blowing agent in a polymerization step, and at the same time, for optimally controlling process conditions to prevent loss of a formed chemical pore structure due to the increased amount of the chemical blowing agent in a subsequent pulverization process.

[Technical Solution]

To solve the above problem, there is provided a method of preparing a superabsorbent polymer, the method including the steps of:

forming a water-containing gel polymer having acidic groups by polymerizing a monomer mixture including an acrylic acid-based monomer having acidic groups, of which at least part is neutralized, and a capsule blowing agent (step 1); chopping the water-containing gel polymer so that the average particle size, defined as the average of the major and minor axis lengths of the particles, becomes 20 mm to 30 mm (step 2); drying the chopped water-containing gel polymer (step 3); and preparing a base polymer by pulverizing the dried water-containing gel polymer to have a median particle size ($D_{50}$) of 300 μm to 400 μm (step 4), wherein the capsule blowing agent is included in an amount of 3,000 ppmw or more with respect to the total weight of the acrylic acid-based monomer.

[Effect of the Invention]

According to a method of preparing a superabsorbent polymer of the present invention, it is possible to prepare a superabsorbent polymer having a superior absorption rate while showing minimal generation of fine particles by securing an absorption rate using an increased amount of a chemical blowing agent in a polymerization step, and at the same time, by optimizing process conditions to prevent loss of a formed chemical pore structure due to the increased amount of the chemical blowing agent in a subsequent pulverization process.

[Brief Description of Drawings]

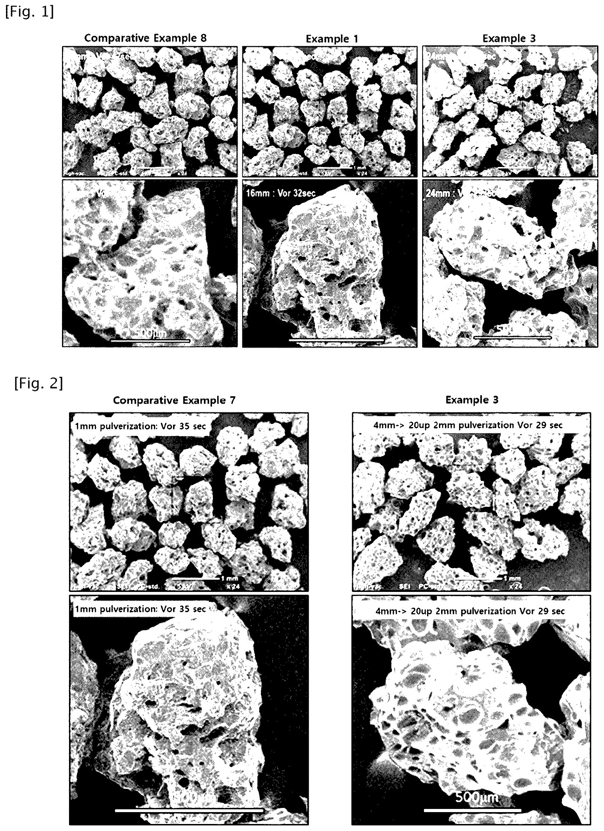

FIGS. 1 and 2 show SEM images of base polymer particles prepared according to Examples and Comparative Examples.

[Detailed Description of the Embodiments]

The terms used in this description are just for explaining exemplary embodiments and it is not intended to restrict the present invention.

The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The terms "the first", "the second", "the third" and the like are used to describe a variety of components, and these terms are merely employed to differentiate one component from other components.

The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.

As used herein, the term "polymer" means a polymerized state of water-soluble ethylenically unsaturated monomers, and may encompass those of all water content ranges or particle size ranges. Among the polymers, those having a water content (a moisture content) of about 40% by weight or more after being polymerized and before being dried may be called a water-containing gel polymer. Particles obtained by pulverizing and drying the water-containing gel polymer may be called a crosslinked polymer.

Further, as used herein, the term "crosslinked polymer" means those obtained by crosslinking polymerization of the water-soluble ethylenically unsaturated monomers, of which acidic groups are at least partially neutralized, and the "base polymer particles" means a material including such a crosslinked polymer.

Further, the term "superabsorbent polymer" refers to a crosslinked polymer obtained by polymerizing a water-soluble ethylenically unsaturated monomer, of which acidic groups are at least partially neutralized, or a base polymer particle in the form of powder consisting of superabsorbent polymer particles obtained by pulverizing the crosslinked polymer, or is used to encompass those made suitable for commercialization by performing an additional process, for example, surface crosslinking, reassembling of fine particles, drying, pulverizing, classifying, etc., on the crosslinked polymer or the base polymer.

(Method of Preparing Superabsorbent Polymer)

A method of preparing a superabsorbent polymer according to one embodiment of the present invention includes the steps of forming a water-containing gel polymer having acidic groups by polymerizing a monomer mixture including an acrylic acid-based monomer having acidic groups, of which at least part is neutralized, and a capsule blowing agent (step 1); chopping the water-containing gel polymer so that the average particle size, defined as the average of the major and minor axis lengths of the particles, becomes 20 mm to 30 mm (step 2); drying the chopped water-containing gel polymer (step 3); and preparing a base polymer by pulverizing the dried water-containing gel polymer to have a median particle size ($D_{50}$) of 300 μm to 400 μm (step 4).

In order for a superabsorbent polymer to have superior absorption properties required for practical application to products, a method of increasing the surface area of the superabsorbent polymer by forming a porous structure inside the superabsorbent polymer is used. Specifically, the porous structure is formed inside the polymer by performing the polymerization step by including a blowing agent in a monomer composition. However, the excessive use of blowing agent to form a desired degree of the porous structure involves problems of deterioration in overall physical properties of the superabsorbent polymer, for example, surface tension, permeability, or bulk density, etc., particularly, loss of the porous structure during a pulverization process after polymerization, even though the porous structure is formed in the polymerization step, a remarkable increase in fine particle generation during the process, and deterioration of absorption rate.

Accordingly, the present inventors found that the desired physical properties may be realized by securing the absorption rate by using a capsule blowing agent in the polymerization step in an amount of 3,000 ppmw or more which is larger than that normally used, and at the same time, by optimizing the chopping and pulverization process conditions to prevent loss of the chemical pore structure due to the increased amount of the blowing agent in the subsequent pulverization process, thereby completing the present invention.

Hereinafter, each step of the method of preparing the superabsorbent polymer according to specific embodiments of the present invention will be described in more detail.

(Step 1: Polymerization step)

First, the method of preparing the superabsorbent polymer according to one embodiment of the present invention includes the step (step 1) of forming a water-containing gel polymer having acidic groups by polymerizing a monomer mixture including an acrylic acid-based monomer having acidic groups, of which at least part is neutralized, and a capsule blowing agent.

The step is a step of forming the water-containing gel polymer by performing thermal polymerization or photopolymerization of a monomer composition including the monomer mixture including the acrylic acid-based monomer having acidic groups, and an internal crosslinking agent and/or a polymerization initiator, etc.

The acrylic acid-based monomer may be any monomer commonly used in the preparation of superabsorbent polymers. Non-limiting example of the acrylic acid-based monomer may be a compound represented by the following Chemical Formula 1:

[Chemical Formula 1]      $R_1\text{-COOM}^1$

in Chemical Formula 1,
$R_1$ is an alkyl group containing an unsaturated bond and having 2 to 5 carbon atoms, and
$M^1$ is a hydrogen atom, a monovalent or divalent metal, an ammonium group, or an organic amine salt.

Preferably, the monomer may be one or more selected from the group consisting of acrylic acid, methacrylic acid, and a monovalent metal salt thereof, a divalent metal salt thereof, an ammonium salt thereof, and an organic amine salt thereof. As described, when acrylic acid or a salt thereof is used as the acrylic acid-based monomer, it is advantageous in terms of obtaining a superabsorbent polymer having improved absorbency. In addition, the monomer may include one or more selected from the group consisting of an anionic monomer such as maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, and a salt thereof; a nonionic hydrophilic monomer such as (meth) acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and an unsaturated monomer containing an amino group such as (N,N)-dimethylaminoethyl(meth)acrylate or (N,N)-dimethylaminopropyl(meth)acrylamide, and a quaternary ammonium compound thereof.

Here, the acrylic acid-based monomer may have acidic groups, in which at least part of the acidic groups is neutralized. Preferably, those obtained by partially neutralizing the monomer with an alkali substance such as sodium hydroxide, potassium hydroxide, ammonium hydroxide, etc. may be used.

The step of neutralizing the acidic groups may be carried out by mixing with a neutralizing agent capable of neutralizing the acidic groups, and examples of the neutralizing agent may include basic substances such as sodium hydroxide, potassium hydroxide, ammonium hydroxide, etc.

In this regard, the degree of neutralization of the monomer may be 40 mol% to 95 mol%, or 40 mol% to 80 mol%, or 45 mol% to 75 mol%. The range of the degree of neutralization may vary depending on the final physical properties. An excessively high degree of neutralization causes the neutralized monomers to be precipitated, and thus polymerization may not readily occur. On the contrary, an excessively low degree of neutralization not only greatly deteriorates the absorbency of the polymer but also endows the polymer with hard-to-handle properties, like elastic rubber.

The capsule blowing agent is a component that generates bubbles in the polymerization step to form appropriate pores inside the water-containing gel polymer, thereby increasing the surface area of the water-containing gel polymer, and accordingly, improving the absorption rate of the polymer.

The capsule blowing agent may have a core-shell structure including a core containing a hydrocarbon and a shell consisting of a thermoplastic resin which is formed on the core.

The hydrocarbon may be one or more selected from the group consisting of n-propane, n-butane, iso-butane, cyclobutane, n-pentane, iso-pentane, cyclopentane, n-hexane, iso-hexane, cyclohexane, n-heptane, iso-heptane, cycloheptane, n-octane, iso-octane, and cyclooctane, and the thermoplastic resin may be a polymer formed from one or more monomers selected from the group consisting of (meth)acrylate, (meth)acrylonitrile, aromatic vinyl compound, vinyl acetate, halogenated vinyl compound, and halogenated vinylidene compound.

Commercially available capsule blowing agents may include, but are not limited to, F-36D (Asahi Kasei Corporation), MS-140DS (Dongjin Semichem), etc.

The capsule blowing agent is included in an amount of 3,000 ppmw or more with respect to the total amount of the acrylic acid-based monomer, which is an excessive amount, as compared to blowing agents commonly used, and enables the formation of a desired degree of pores in the water-containing gel polymer. On the other hand, even though the amount of the blowing agent is increased to form a desired large amount of pore structures, many of the pore structures are lost in the subsequent pulverization process, and there is a problem that a large amount of fine particles are generated in this process. The present invention optimizes subsequent chopping and pulverization conditions to minimize the loss of pore structures formed in the polymerization step, thereby further improving the absorption rate.

When the amount of the encapsulated blowing agent is less than 3,000 ppmw, it may be difficult to form the desired degree of the pore structure, and thus the effect of improving the absorption rate may be insignificant. Preferably, the amount of the encapsulated blowing agent may be 3,000 ppmw or more, 3,100 ppmw or more, 4,000 ppmw or more, or 10,000 ppmw or less, 9,000 ppmw or less, 8,000 ppmw or less, 7,000 ppmw or less, or 3,000 ppmw to 10,000 ppmw, 3,000 ppmw to 9,000 ppmw, 4,000 ppmw to 8,000 ppmw, 4,000 ppmw to 7,000 ppmw. The above amount range is preferred in terms of forming appropriate pores that have excellent absorption rate without deteriorating a gel strength.

As the internal crosslinking agent, any compound may be used as long as it enables introduction of a crosslink bond upon polymerization of the acrylic acid-based monomer. Non-limiting examples of the internal crosslinking agent may include multifunctional crosslinking agents, such as N,N'-methylenebisacrylamide, trimethylolpropane tri(meth) acrylate, ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentacrylate, glycerin tri(meth)acrylate, pentaerythritol tetraacrylate, triarylamine, ethylene glycol diglycidyl ether, propylene glycol, glycerin, or ethylene carbonate, which may be used alone or in combination of two or more thereof, but are not limited thereto. Preferably, among them, ethylene glycol diglycidyl ether may be used.

In the monomer composition, such an internal crosslinking agent may be used in an amount of 100 ppmw to 10,000 ppmw with respect to the weight of the acrylic acid-based monomer. When included in the above amount range, an appropriate level or higher of a strength may be achieved by sufficient crosslinking, and the introduction of the appropriate crosslinking structure enables sufficient absorption properties to be achieved. Preferably, it may be included in an amount of 100 ppmw or more, 200 ppmw or more, 300 ppmw or more or 600 ppmw or more, and 10,000 ppmw or less, 9,000 ppmw or less, 7,000 ppmw or 5,000 ppmw or less, 200 ppmw to 9,000 ppmw, 300 ppmw to 7,000 ppmw or 600 ppmw to 5,000 ppmw. When two or more kinds of the internal crosslinking agents are used, the above amount refers to the amount of the mixture thereof.

When the amount of the internal crosslinking agent is too low, crosslinking does not occur sufficiently, making it difficult to implement the appropriate level or higher of the strength, and when the amount of the internal crosslinking agent is too high, the internal crosslinking density increases, making it difficult to implement a desired water retention capacity.

In addition, the monomer composition may further include additives such as a polymerization initiator, a surfactant, a thickener, a plasticizer, a preservation stabilizer, an antioxidant, etc., as needed.

As the polymerization initiator, a thermal polymerization initiator or a photopolymerization initiator may be used depending on a polymerization method. However, even though the photopolymerization is performed, a certain amount of heat may be generated by UV irradiation or the like, and also generated with progression of the polymerization reaction which is an exothermic reaction. Therefore, the thermal polymerization initiator may be further included.

Here, as the photopolymerization initiator, for example, one or more compounds selected from the group consisting of benzoin ether, dialkyl acetophenone, hydroxyl alkylketone, phenyl glyoxylate, benzyl dimethyl ketal, acyl phosphine, and α-aminoketone may be used. Among them, specific examples of acyl phosphine may include commercially available lucirin TPO, i.e., 2,4,6-trimethyl-benzoyl-trimethyl phosphine oxide. More various photopolymerization initiators are disclosed in "UV Coatings: Basics, Recent Developments and New Application (Elsevier 2007)" written by Reinhold Schwalm, p115, which may be served as a reference.

As the thermal polymerization initiator, one or more compounds selected from the group consisting of persulfate-based initiators, azo-based initiators, hydrogen peroxide, and ascorbic acid may be used. Specifically, the persulfate-based initiators may be exemplified by sodium persulfate ($Na_2S_2O_8$), potassium persulfate ($K_2S_2O_8$), ammonium persulfate (($NH_4$)$_2S_2O_8$) or the like. Further, the azo-based initiators may be exemplified by 2,2-azobis(2-amidinopropane)dihydrochloride, 2,2-azobis-(N,N-dimethylene)isobutyramidine dihydrochloride, 2-(carbamoylazo)isobutyronitrile, 2,2-azobis[2-(2-imidazolin-2-yl)propane] dihydrochloride, 4,4-azobis-(4-cyanovaleric acid) or the like. More various thermal polymerization initiators are disclosed in "Principle of Polymerization (Wiley, 1981)" written by Odian, p203, which may be served as a reference.

The polymerization initiator may be used in an amount of 10 ppmw to 10,000 ppmw with respect to the weight of the acrylic acid-based monomer. When included in the above amount range, an appropriate level or higher of a strength may be achieved by sufficient crosslinking, and the introduction of the appropriate crosslinking structure enables sufficient absorption properties to be achieved. Preferably, the polymerization initiator may be included in an amount of 50 ppmw or more, 80 ppmw or more, 100 ppmw or more or 500 ppmw or more, and 10,000 ppmw or less, 9,000 ppmw or less, 7,000 ppmw or 5,000 ppmw or less, and 50 ppmw to 5,000 ppmw, 80 ppmw to 5,000 ppmw or 80 ppmw to 3,000 ppmw. When a mixture of the photopolymerization initiator and the thermal polymerization initiator is used, the above amount refers to the amount of the mixture thereof.

When the concentration of the polymerization initiator is too low, the polymerization rate may become slow, and monomers remaining in the final product may be extracted in a large amount, which is not preferred. On the contrary, when the concentration of the polymerization initiator is too high, polymer chains constituting the network become short, and thus the content of water-soluble components is increased and physical properties of the polymer may deteriorate, such as a reduction in absorbency under pressure, which is not preferred.

Such a monomer composition may be prepared in a solution form, in which the raw materials, such as the above-described monomer mixture, blowing agent, polymerization initiator, internal crosslinking agent, etc., are dissolved in a solvent.

In this regard, as the applicable solvent, any solvent may be used without limitations on the composition, as long as it is able to dissolve the above-described raw materials. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylacetamide, or a mixture thereof may be used.

Further, the formation of the water-containing gel polymer through the polymerization of the monomer composition may be performed by a common polymerization method, and the process is not particularly limited. For non-limiting example, the polymerization method may be largely classified into thermal polymerization and photopolymerization according to a polymerization energy source, and when the thermal polymerization is carried out, it may be carried out in a reactor like a kneader equipped with agitating spindles, and when the photopolymerization is carried out, it may be carried out in a reactor equipped with a movable conveyor belt.

For example, the monomer composition is injected to the reactor like the kneader equipped with the agitating spindles, and thermal polymerization is carried out by providing hot air thereto or by heating the reactor, thereby obtaining the water-containing gel polymer. In this regard, the water-containing gel polymer discharged from an outlet of the reactor may be obtained as particles having a size of several millimeters or centimeters, according to the type of agitating spindles equipped in the reactor. Specifically, the water-containing gel polymer may be obtained in various forms according to a concentration of the monomer composition fed thereto, a feeding speed or the like, and the water-containing gel polymer having a weight average particle size of 2 mm to 50 mm may be generally obtained.

For another example, when the monomer composition is subjected to photopolymerization in the reactor equipped with the movable conveyor belt, the water-containing gel polymer may be obtained in a sheet shape. In this regard, the thickness of the sheet may vary according to the concentration of the monomer composition fed thereto and the feeding speed. The sheet is preferably controlled at a thickness of 0.5 cm to 5 cm in order to assure the production speed while allowing the entire sheet to be uniformly polymerized.

The water-containing gel polymer obtained by such a method may generally exhibit a water content of 40% by weight to 80% by weight. Meanwhile, the "water content" means a weight occupied by water with respect to the total weight of the water-containing gel polymer, which may be a value obtained by subtracting the weight of the dried polymer from the weight of the water-containing gel polymer. Specifically, the water content may be defined as a value calculated by measuring the weight loss due to evaporation of moisture in the polymer during the process of drying by raising the temperature of the polymer through infrared heating. At this time, the water content is measured under the drying conditions of room temperature to about 180°C for about 40 minutes.

The water-containing gel polymer obtained by the above method includes a plurality of pores with a diameter of

about 5 μm to 400 μm on the surface of the water-containing gel polymer when the pore distribution on the surface of the water-containing gel polymer is analyzed by SEM image analysis. In addition, a pore area fraction, defined as a ratio of the area of the plurality of pores to the total area of the water-containing gel polymer derived by SEM image analysis, may be 75% to 97%. The specific methods of measuring the pore distribution and the area fraction will be described in more detail in Experimental Example described below.

As described above, in the polymerization step, 3000 ppmw or more of the chemical blowing agent was used, and thus the chemical pore structure was appropriately formed inside the polymer, and the loss of the pore structure was minimized by optimizing the subsequent chopping and pulverization conditions, and accordingly, it is possible to prepare a superabsorbent polymer having a superior absorption rate while showing minimal generation of fine particles.

(Step 2: Chopping step)

Next, the step (step 2) of chopping the water-containing gel polymer of the step 1 is included. The polymer formed by using an excessive amount of the capsule blowing agent in the polymerization step of the step 1 includes a plurality of pore structures. In the present invention, a pulverization process may be more mildly performed through a chopping process under specific conditions before drying and pulverization processes so that the pore structures are not lost.

In the step 2, the water-containing gel polymer is chopped so that the average particle size, defined as the average of the major and minor axis lengths of the particles, becomes 20 mm to 30 mm.

Specifically, the chopping process is performed so that the particle has a relatively large size, and this process, together with the control of the subsequent pulverization process conditions, enables the implementation of an appropriate particle size distribution while minimizing the loss of the pore structure formed in the polymerization step, thereby significantly reducing generation of fine particles. In addition, the drying efficiency is increased by performing the chopping process under the above conditions before the drying step, and the loss of the pore structure may be more effectively controlled in the pulverization process after the drying process.

The average particle size of the polymer was calculated by selecting a sample from the chopped particles, calculating the particle size by the average value of the long axis length and the short axis length of the selected sample particles, and determining the arithmetic average value thereof as the average particle size. The specific measurement method thereof will be described in Experimental Example described below.

When the average particle size of the water-containing gel polymer after the chopping is less than 20 mm, the generated pore structure may be lost due to the increased amount of the blowing agent, and as a result, the improvement effect of the absorption rate may be reduced, and when the average particle size exceeds 30 mm, the efficiency of the subsequent drying process may be significantly reduced, and aggregates may be generated, making it difficult to smoothly perform the drying process.

Preferably, the average particle size of the water-containing gel polymer after the chopping may be 20 mm to 28 mm, and 20.2 mm to 27.5 mm, and is more suitable for achieving the aforementioned effect within the above range.

According to one embodiment of the present invention, the chopping process is performed by passing the water-containing gel polymer through a chopper die having a plurality of holes with a diameter of 16 mm to 24 mm. When the chopping is performed using the chopper die as described above, it is easy to chop into the polymer having the above-mentioned range of the average particle size, and accordingly, it is suitable for improving the desired physical properties and enhancing the efficiency of the drying process.

(Step 3: Drying step)

Next, the method of preparing the superabsorbent polymer according to one embodiment of the present invention includes the step (step 3) of drying the chopped water-containing gel polymer.

In this regard, the drying temperature of the drying step may be 150°C to 250°C. When the drying temperature is lower than 150°C, the drying time becomes excessively long, and it is apprehended that the physical properties of the superabsorbent polymer finally formed may deteriorate. When the drying temperature is higher than 250°C, only the surface of the polymer is excessively dried, and thus fine particles may be generated during the subsequent pulverization process, and it is apprehended that the physical properties of the superabsorbent polymer finally formed may deteriorate. Accordingly, the drying may be preferably carried at a temperature of 150°C to 200°C, and more preferably at a temperature of 150°C to 190°C.

The drying time may be 20 minutes to 90 minutes in consideration of process efficiency, etc., but is not limited thereto.

Meanwhile, the drying step may be performed by a multi-stage process within the above-mentioned temperature range.

With regard to the drying method of the drying step, any method may be selected and used without limitation in the constitution as long as it may be commonly used in the process of drying the water-containing gel polymer. Specifically, the drying step may be carried out by a method of supplying hot air, irradiating infrared rays, irradiating microwaves, irradiating ultraviolet rays or the like. The hot air supply may be conducted by a method of using an oven capable of transferring air volume up and down.

The water content of the polymer after carrying out the drying step may be about 0.1% by weight to about 10% by weight.

(Step 4: Pulverizing step)

Next, the step (step 4) of preparing a base polymer by pulverizing the dried water-containing gel polymer is included.

In the step 4, the base polymer is prepared by pulverizing the dried water-containing gel polymer to have a median particle size ($D_{50}$) of 300 $\mu$m to 400 $\mu$m.

Specifically, as described above, the chopping process is performed before the drying process so that the polymer has a relatively large particle size, and at the same time, the pulverization process is controlled within the above-mentioned range, thereby minimizing the loss of the pore structure formed in the polymerization step while implementing an appropriate particle size distribution, and as result, generation of fine particles may be remarkably reduced.

The median particle size ($D_{50}$) of the polymer refers to the corresponding particle size when a cumulative distribution percentage reaches 50%, when distributed by weight based on the particle sizes of the pulverized particles. Preferably, the median particle size ($D_{50}$) refers to the corresponding particle size value when the cumulative distribution percentage reaches 50%, after vibrating the pulverized base polymer particles using a classifier at an amplitude of 1.5 mm/g for 10 minutes, classifying the particles into particles of 850 $\mu$m or more, 850 $\mu$m to 600 $\mu$m, 600 $\mu$m to 300 $\mu$m, 300 $\mu$m to 150 $\mu$m, and 150 $\mu$m or less, and then measuring % by weight according to the size, and distributing the particles based on the weight.

When the median particle size ($D_{50}$) of the polymer after the above pulverization is less than 300 $\mu$m, the formed pore structure may be lost due to the increased amount of the blowing agent, thereby reducing the effect of improving the absorption rate, and there may be a problem that generation of fine particles increases. Further, when the median particle size exceeds 400 $\mu$m, the absorption properties of the final polymer may rather deteriorate.

Preferably, the median particle size ($D_{50}$) of the polymer after the above pulverization may be 300 $\mu$m to 350 $\mu$m, and is more suitable for achieving the aforementioned effect within the above range.

According to one embodiment of the present invention, the pulverization process may prepare base polymer particles by passing the dried water-containing gel polymer through a screen having a mesh of 4 mm or more. In this case, it is easy to prepare base polymer particles satisfying the aforementioned median particle size ($D_{50}$), and therefore, it is suitable for achieving the effect of improving the desired physical properties. The specific measurement method thereof will be described in Experimental Example described below.

Preferably, the pulverization process is performed using a mill equipped with a screen mesh of 4 mm or more, and in this regard, the applicable mill may be specifically a pin mill, a hammer mill, a screw mill, a roll mill, a disc mill, or a jog mill, but is not limited to the above-described examples.

Preferably, the pulverization of the step 4 may be performed by multi-stage pulverization.

For one example, the pulverization of the step 4 may include the steps of performing a primary pulverization of the dried water-containing gel polymer by passing the same through a screen having a mesh of 4 mm or more (step 4-1); and performing a secondary pulverization of the water-containing gel polymer having a reference particle size or larger among the primarily pulverized water-containing gel polymers by passing the same through a screen having a mesh of less than 4 mm (step 4-2), wherein the reference particle size of the secondary pulverization step may be 850 $\mu$m or less, and the pulverization process may be performed, in which only particles having a relatively large particle size are selected and subjected to a mild pulverization, thereby maintaining the pore structure while minimizing generation of fine particles.

For another example, the pulverization of the step 4 may include the steps of performing a primary pulverization of the dried water-containing gel polymer by passing the same through a screen having a mesh of 4 mm to 8 mm (step 4-1); and performing a secondary pulverization of the water-containing gel polymer having a reference particle size or larger among the primarily pulverized water-containing gel polymers by passing the same through a screen having a mesh of 1 mm to 3 mm (step 4-2), wherein the reference particle size of the secondary pulverization step may be 850 $\mu$m or less, and the pulverization process may be performed, in which only particles having a relatively large particle size are selected and subjected to a mild pulverization, thereby maintaining the pore structure while minimizing generation of fine particles.

According to one embodiment of the present invention, when the pulverization step is performed by multi-stage pulverization, the product of the secondary pulverization may be mixed with the product of the primary pulverization, and the base polymer particles may refer to a mixture of the primary and secondary pulverization products.

The water-containing gel polymer obtained by the above method includes a plurality of pores with a diameter of about 5 $\mu$m to about 200 $\mu$m on the surface of the base polymer particles when the pore distribution on the surface of the base polymer particles is analyzed by SEM image analysis.

In addition, a pore area fraction, defined as a ratio of the area of the plurality of pores to the total area of the base polymer particles derived by SEM image analysis, may be 60% to 70%. The specific methods of measuring the pore distribution and area fraction will be described in more detail in Experimental Example described below. By satisfying the above conditions, it is possible to achieve an appropriate particle size distribution while minimizing the loss of the pore structure formed in the polymerization step, thereby remarkably reducing generation of fine particles.

As described above, in the polymerization step, the chemical blowing agent is used in an amount of 3000 ppmw or more, and thus the chemical pore structure is appropriately formed inside the polymer, and the aforementioned chopping and pulverization process conditions are optimized to minimize the loss of the pore structure, thereby preparing a superabsorbent polymer having a superior absorption rate while minimizing generation of fine particles.

(Additional step)

Additionally, in the above-described pulverization process, in order to manage physical properties of the superabsorbent polymer finally commercialized, the polymer particles obtained after pulverization may undergo a separate process of classifying the particles according to the particle size. Preferably, the step of classifying the particles into fine particles having a particle size of less than 150 $\mu$m and particles having a particle size of 150 $\mu$m to 850 $\mu$m may be further included.

When the above-mentioned pulverization step is performed by a multi-stage pulverization, the classifying step may be performed on the primarily pulverized polymer, followed by the secondary pulverization. In addition, the classifying step may be performed on the polymer of which the secondary pulverization has been completed.

According to one embodiment of the present invention, base polymer particles may be prepared through the pulverization and/or classifying step.

Among the base polymer particles prepared according to one embodiment of the present invention, particles having a particle size of less than 150 $\mu$m (fine particles) may be 30% or less, preferably 29% or less, or 28% or less. The lower limit of the amount of the fine particles may be 0% or more. The method of measuring the particle distribution will be described in more detail in Experimental Example described below.

Further, a vortex absorption rate of the base polymer particles prepared according to one embodiment of the present invention may be 33 seconds or less, preferably 32 seconds or less, or 30 seconds or less. The lower limit of the vortex absorption rate may be 10 seconds or more, or 15 seconds or more. The specific measurement method thereof will be described in more detail in Experimental Example described below.

The base polymer particles prepared according to one embodiment of the present invention may achieve the above-described content of fine particles and the physical property of the vortex absorption rate at the same time. This is achieved by increasing the amount of the blowing agent as described above to secure the absorption rate, and at the same time, by optimizing the chopping and pulverization conditions to prevent loss of the chemical pore structure due to the increased amount of the chemical blowing agent in the subsequent chopping and pulverization processes.

Meanwhile, after preparing the base polymer particles through the above-described classifying process, a step of surface-crosslinking the base polymer particles by heat treatment in the presence of a surface crosslinking agent may be further included.

The surface-crosslinking step is to induce a crosslinking reaction on the surface of the base polymer particles in the presence of the surface crosslinking agent, and the unsaturated bonds of the water-soluble ethylenically unsaturated monomers that are not crosslinked to remain on the surface are crosslinked by the surface crosslinking agent, thereby forming a superabsorbent polymer with increased surface crosslinking density.

Specifically, a surface-crosslinked layer may be formed by a heat treatment process in the presence of the surface crosslinking agent, and the heat treatment process increases a surface crosslinking density, i.e., an external crosslinking density, but does not change an internal crosslinking density, and thus the superabsorbent polymer on which the prepared surface-crosslinked layer is formed has a structure in which the crosslinking density of the outside is higher than inside.

In the surface-crosslinking step, a surface crosslinking agent composition including an alcohol-based solvent and water, in addition to the surface crosslinking agent, may be used.

Meanwhile, as the surface crosslinking agent included in the surface crosslinking agent composition, surface crosslinking agents which have been used in the preparation of the superabsorbent polymers may be used without particular limitation. For example, the surface crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; one or more carbonate-based compounds selected from the group consisting of ethylene carbonate and propylene carbonate; epoxy compounds such as ethylene glycol diglycidyl ether, etc.; oxazoline compounds such as oxazolidinone, etc.; polyamine compounds; oxazoline compounds; mono-, di-, or polyoxazolidinone compounds; or cyclic urea compounds, etc. Preferably, those the same as the above-described internal crosslinking agent may be used, and for example, a diglycidyl ether-based compound of alkylene glycol, such as ethylene glycol diglycidyl ether, etc., may be used.

Such a surface crosslinking agent may be used in an amount of 0.001 part by weight to 2 parts by weight, based on 100 parts by weight of the base polymer particles. Preferably, the surface crosslinking agent may be used in an amount of 0.005 parts by weight or more, 0.01 part by weight or more, or 0.02 parts by weight or more, and 0.5 parts by weight or less, 0.3 parts by weight or less. By controlling the amount range of the surface crosslinking agent within the above-described range, it is possible to prepare a superabsorbent polymer exhibiting overall physical properties, such as excellent absorption performances, liquid permeability, etc.

Meanwhile, the surface crosslinking agent may be added to the base polymer particles in the form of the surface crosslinking agent composition including the same, and there is no particular limitation on the method of adding the surface crosslinking agent composition. For example, a method of adding and mixing the surface crosslinking agent composition and the base polymer particles in a reactor, a method of spraying the surface crosslinking agent composition onto the base polymer particles, a method of mixing the base polymer particles and the surface crosslinking agent composition by continuously feeding them to a mixer which is continuously operated, etc. may be used.

Further, the surface crosslinking agent composition may further include water and/or a hydrophilic organic solvent as a medium. Accordingly, there is an advantage that the surface crosslinking agent, etc. may be evenly dispersed in the base polymer particles. In this regard, the amount of water and hydrophilic organic solvent may be determined by controlling the addition ratio with respect to 100 parts by weight of the base polymer particles, for the purpose of inducing uniform dissolution/dispersion of the surface crosslinking agent, preventing agglomeration of the base polymer particles, and at the same time, optimizing the surface penetration depth of the surface crosslinking agent.

The surface-crosslinking step may be performed by heat treatment at a temperature of 110°C to 200°C or 110°C to 150°C for about 30 minutes or more. More specifically, determining the above-described temperature as a maximum reaction temperature, the surface crosslinking reaction may be performed at the maximum reaction temperature by heat treatment for 30 minutes to 80 minutes, or 40 minutes to 70 minutes.

By meeting these surface crosslinking process conditions (particularly, temperature raising conditions and reaction conditions at the maximum reaction temperature), a superabsorbent polymer appropriately satisfying the physical properties, such as superior liquid permeability under pressure, etc. may be prepared.

A means for raising temperature for the surface crosslinking reaction is not particularly limited. Heating may be performed by providing a heating medium or by directly providing a heat source. In this regard, the kind of the applicable heating medium may include steam, hot air, a hot fluid such as hot oil or the like, but is not limited thereto. The temperature of the heating medium to be provided may be properly selected in consideration of the means of the heating medium, the heating rate, and the heating target temperature. Meanwhile, as the heat source to be directly provided, an electric heater or a gas heater may be exemplified, but is not limited to these examples.

Meanwhile, in the method of preparing the superabsorbent polymer according to one embodiment of the present invention, aluminum salts, such as aluminum sulfate salt, etc., other various polyvalent metal salts may be further used during the surface crosslinking in order to further improve liquid permeability, etc. Such polyvalent metal salts may be included on the surface-crosslinked layer of the superabsorbent polymer finally prepared.

(Superabsorbent polymer)

According to one embodiment of the present invention, provided is a superabsorbent polymer including base polymer particles prepared by the method of preparing the superabsorbent polymer. According to the above-described method of preparing the superabsorbent polymer of one embodiment, it is possible to prepare a superabsorbent polymer having superior absorption properties.

Hereinafter, the actions and effects of the present invention will be described in more detail with reference to specific exemplary embodiments of the present invention. However, these exemplary embodiments are provided only for illustrating the present invention, and the scope of the present invention is not limited thereto.

**[Example and Comparative Example]**

**Example 1**

(Step 1: Polymerization process)

100 parts by weight of acrylic acid was mixed with 0.15 parts by weight of EJ-1030S as an internal crosslinking agent and 0.007 parts by weight of IRGACURE 819 as a photoinitiator to prepare a monomer solution. Subsequently, while continuously feeding the monomer solution by a metering pump, 140 parts by weight of a 31 wt% aqueous sodium hydroxide solution was continuously subjected to line mixing to prepare an aqueous monomer solution. At this time, after confirming that the temperature of the aqueous monomer solution raised to about 72°C or higher by neutralization heat, the solution was left until the temperature was cooled to 40°C. When the temperature was cooled to 40°C, 0.31 parts by weight of solid-phase F36D (3,100 ppmw with respect to the acrylic acid monomer) as a capsule blowing agent was added to the aqueous monomer solution, and at the same time, 5.6 parts by weight of a 4 wt% aqueous sodium persulfate solution was added. The solution was poured into a tray in the form of Vat (width of 15 cm × length of 15 cm) installed in a square polymerization reactor on which a light irradiation device was mounted, and of which inside was preheated to 80°C, and photo-initiation was conducted by light irradiation. After UV irradiation for 60 seconds, the solution was additionally reacted for 120 seconds to obtain a water-containing gel polymer in the form of a sheet.

(Step 2: Chopping process)

To coarsely pulverize the prepared water-containing gel polymer, 100 g of water as a lubricant was evenly sprayed, and then a chopping process was performed by passing the polymer through a chopper die having a plurality of 16 mm-holes.

(Step 3: Drying process)

The chopped water-containing gel polymer was dried in a dryer capable of transferring air volume up and down. Hot air at 180°C was allowed to flow from the lower side to the upper side for 15 minutes, and to flow from the upper side to the lower side again for 15 minutes, thereby uniformly drying the water-containing gel polymer so that the water content of the dried water-containing gel polymer was about 2% or less.

(Step 4: Pulverization process)

The dried water-containing gel polymer was pulverized with Fritsch's Pulverisette 19 instrument. First, a screen mesh with a 4 mm gap was fixed to the bottom of the rotator, and then primary pulverization was performed.
Thereafter, the dried polymer thus primarily pulverized was classified, and particles with a particle size of 850 μm or more was subjected to secondary pulverization after fixing a screen mesh with a 2 mm gap, and mixed with the products of the primary pulverization to prepare base polymer particles.

**Examples 2 to 5 and Comparative Examples 1 to 11**

Base polymer particles were prepared in the same manner as in Example 1, except that the components and contents used in the polymerization step of the step 1 were used as shown in Table 1 below, and the conditions of the chopping step of the step 2 and the pulverization step of the step 4 were as shown in Table 2 below.
Here, the chopping step refers to the hole size (mm) of the chopper to be used, the pulverization step refers to the mesh size (mm), and when the secondary pulverization is performed, it refers to the pulverization process being performed on particles of #20 among the products of the primary pulverization.

[Table 1]

| Section | Crosslinking polymerization step | |
|---|---|---|
| | Blowing agent | Amount (ppmw) |
| Example 1 | F36D | 3,100 |
| Example 2 | F36D | 3,100 |
| Example 3 | F36D | 3,100 |
| Example 4 | F36D | 6,200 |
| Example 5 | F36D | 10,000 |
| Comparative Example 1 | F36D | 3,100 |
| Comparative Example 2 | F36D | 6,200 |
| Comparative Example 3 | F36D | 10,000 |
| Comparative Example 4 | F36D | 3,100 |
| Comparative Example 5 | F36D | 3,100 |
| Comparative Example 6 | F36D | 3,100 |

(continued)

| Section | Crosslinking polymerization step | |
|---|---|---|
| | Blowing agent | Amount (ppmw) |
| Comparative Example 7 | F36D | 3,100 |
| Comparative Example 8 | F36D | 3,100 |
| Comparative Example 9 | F36D | 3,100 |
| Comparative Example 10 | F36D | 2,000 |
| Comparative Example 11 | F36D | 2,000 |

[Table 2]

| Section | Step 2: Chopping step | | Step 4: Pulverization step | | |
|---|---|---|---|---|---|
| | (mm) | Average particle size (mm) | Primary (mm) | Secondary (mm) | Median particle size $D_{50}$ ($\mu$m) |
| Example 1 | 16 | 20.2 | 4 | 2 | 315 |
| Example 2 | 20 | 21.6 | 4 | 2 | 334 |
| Example 3 | 24 | 24.8 | 4 | 2 | 340 |
| Example 4 | 24 | 27.1 | 4 | 2 | 317 |
| Example 5 | 24 | 26.8 | 4 | 2 | 350 |
| Comparative Example 1 | 12 | 9.1 | 1 | - | 283 |
| Comparative Example 2 | 12 | 12.7 | 1 | - | 265 |
| Comparative Example 3 | 12 | 15.1 | 1 | - | 250 |
| Comparative Example 4 | 8 | 7.2 | 1 | - | 284 |
| Comparative Example 5 | 16 | 20.2 | 1 | - | 280 |
| Comparative Example 6 | 20 | 21.6 | 1 | - | 265 |
| Comparative Example 7 | 24 | 24.8 | 1 | - | 252 |
| Comparative Example 8 | 8 | 7.2 | 4 | 2 | 271 |
| Comparative Example 9 | 12 | 9.2 | 4 | 2 | 278 |
| Comparative Example 10 | 24 | 16.2 | 4 | 2 | 284 |
| Comparative Example 11 | 16 | 11.2 | 4 | 2 | 255 |

Here, the average particle size of the step 2 was obtained by randomly selecting 50 particles (about 10% of the total sample) from the chopped particles. The water-containing gel polymer before the drying step was in a spherical or oval shape, and the average values of the major and minor axis lengths of the selected particles were measured, and the arithmetic average thereof was determined as the average particle size.

The median particle size ($D_{50}$) of the step 4 was determined as the corresponding particle size when the cumulative distribution percentage reaches 50%, after classifying the pulverized base polymer particles into particles of 850 $\mu$m more, 850 $\mu$m to 600 $\mu$m, 600 $\mu$m to 300 $\mu$m, 300 $\mu$m to 150 $\mu$m, and 150 $\mu$m or less using a classifier while vibrating the particles at an amplitude of 1.5 mm/g for 10 minutes and sieving through sieves of top #20/#20-30/#30-50/#50-100/#100 bottom, and then measuring % by weight according to the size, and distributing the particles based on the weight.

**[Experimental Example]**

For the superabsorbent polymers including the base polymer particles which were prepared in Examples and Comparative Examples, physical properties were evaluated by the following methods, and the results are shown in Table 3.

Unless otherwise indicated, all of the following physical properties were evaluated at room temperature (25±1°C), and physiological saline or saline means an aqueous solution of 0.9% wt sodium chloride (NaCl).

(1) Particle size distribution

The base polymer particles prepared according to Examples and Comparative Examples were placed in a classifier and vibrated at an amplitude of 1.5 mm/g for 10 minutes to classify the base polymer particles into fine particles having a particle size of less than 150 μm and particles having a particle size of 150 μm to 850 μm, and the content of fine particles having a particle size of less than 150 μm is shown in Table 3 below.

(2) Vortex absorption rate (sec)

With regard to the base polymer particles prepared according to Examples and Comparative Examples, 2 g of the base polymer particle sample was added to 50 mL of physiological saline, and stirred at 600 rpm with a magnetic bar (diameter of 8 mm, length of 30 mm), and a time taken for vortex to disappear was measured in seconds and calculated (see International Publication WO 1987-003208), and the results are shown in Table 3 below.

(3) Pore distribution analysis

(3)-1. Pore area fraction (Area %)

In Examples and Comparative Examples, about 5 g of a sample was prepared each for the water-containing gel polymer and the base polymer particles. For each sample, SEM images of the surface of the sample particles were obtained at a magnification of about 20 times to about 25 times using JCM-6000, JEOL Ltd.
For the obtained SEM images, the pore area fraction was calculated using ImageJ. software according to the following method, and the results are shown in Table 3 below.
In addition, the change rate of the pore area fraction of the base polymer particles to the pore area fraction of the water-containing gel polymer (change rate of pore area fraction (%) = pore area fraction of base polymer particles / pore area fraction of water-containing gel polymer * 100) was calculated and shown together in Table 3.

1) Load image file
2)

$$\text{Set [Image]-[Type]-[8 bit]}$$

3)

$$\text{Set [Image]-[Adjust]-[Threshold]}$$

4) Enter the setting value 0, 160, and then [Apply]
5)

$$\text{Measure Area\% (background + pore) value through [Measure]}$$

6) Measure Area% (background) value individually using Wand tool
7)

$$\text{Particles area} = 100\% - \text{Area\% (background)}$$

8)

$$\text{Pore area} = \text{Area\% (background + pore)} - \text{Area\% (background)}$$

9)

$$\text{Final result (Pore area fraction, Area \%)} = \text{Pore area / Particles area}$$

(3)-2. Visual evaluation of SEM image

For the base polymer particles prepared according to Examples and Comparative Examples, SEM images were analyzed to visually examine the pore characteristics according to the increased amount of the blowing agent, the coarse pulverization and chopping processes.

Specifically, FIG. 1 shows the pore distribution according to the control of the chopping process conditions when the equal amount of the capsule blowing agent was used, in which the SEM images of Comparative Example 8, Example 1, and Example 3 were compared.

FIG. 2 shows the pore distribution according to the multi-stage pulverization process, in which the SEM images of Comparative Example 7 and Example 3 were compared.

[Table 3]

| Section | Water-containing gel polymer | Base polymer particles | | | Change rate (%) of pore area fraction |
| --- | --- | --- | --- | --- | --- |
| | Pore area fraction (Area %) | Absprotion rate (sec) | Content of fine particles (wt%) | Pore area fraction (Area %) | |
| Example 1 | 78.7 | 32 | 23.2 | 62.3 | 79.16 |
| Example 2 | 75.9 | 31 | 22.6 | 61.0 | 80.37 |
| Example 3 | 76.3 | 29 | 20.1 | 64.3 | 84.27 |
| Example 4 | 89.8 | 25 | 24.4 | 64.7 | 72.05 |
| Example 5 | 91.9 | 23 | 27.6 | 62.2 | 67.68 |
| Comparative Example 1 | 74.5 | 35 | 26.5 | 41.1 | 55.17 |
| Comparative Example 2 | 86.9 | 37 | 30.1 | 45.2 | 52.01 |
| Comparative Example 3 | 93.7 | 37 | 34.5 | 34.4 | 36.71 |
| Comparative Example 4 | 75.9 | 44 | 27.3 | 45.5 | 59.95 |
| Comparative Example 5 | 79.9 | 36 | 26.6 | 31.9 | 39.92 |
| Comparative Example 6 | 82.1 | 37 | 26.9 | 29.8 | 36.30 |
| Comparative Example 7 | 75.0 | 35 | 26.6 | 44.1 | 58.80 |
| Comparative Example 8 | 74.9 | 42 | 22.1 | 34.9 | 46.60 |
| Comparative Example 9 | 80.4 | 35 | 21.8 | 44.9 | 55.85 |
| Comparative Example 10 | 65.2 | 35 | 22.3 | 29.8 | 45.71 |
| Comparative Example 11 | 69.1 | 40 | 19.8 | 34.1 | 49.35 |

As confirmed in Table 3 above, even though the increased amount of the blowing agent is used as in the present invention, the chopping and pulverization processes are controlled to an optimal range, and the process conditions are optimized to prevent loss of the formed chemical pore structure due to the increased amount of the blowing agent in the subsequent pulverization process, thereby preparing a superabsorbent polymer having a superior absorption rate while showing minimal generation of fine particles.

**Claims**

1. A method of preparing a superabsorbent polymer, the method comprising the steps of:

forming a water-containing gel polymer having acidic groups by polymerizing a monomer mixture including an acrylic acid-based monomer having acidic groups, of which at least part is neutralized, and a capsule blowing agent (step 1);
chopping the water-containing gel polymer so that the average particle size, defined as the average of the major and minor axis lengths of the particles, becomes 20 mm to 30 mm (step 2);

drying the chopped water-containing gel polymer (step 3); and

preparing a base polymer by pulverizing the dried water-containing gel polymer to have a median particle size ($D_{50}$) of 300 $\mu$m to 400 $\mu$m (step 4),

wherein the capsule blowing agent is included in an amount of 3,000 ppmw or more with respect to the total weight of the acrylic acid-based monomer.

2. The method of claim 1, wherein the capsule blowing agent of the step 1 is included in an amount of 3,000 ppmw to 10,000 ppmw with respect to the total weight of the acrylic acid-based monomer.

3. The method of claim 1, wherein the capsule blowing agent of the step 1 has a core-shell structure including a core containing a hydrocarbon and a shell consisting of a thermoplastic resin which is formed on the core.

4. The method of claim 3, wherein the hydrocarbon is one or more selected from the group consisting of n-propane, n-butane, iso-butane, cyclobutane, n-pentane, iso-pentane, cyclopentane, n-hexane, iso-hexane, cyclohexane, n-heptane, iso-heptane, cycloheptane, n-octane, iso-octane, and cyclooctane, and

the thermoplastic resin is a polymer formed from one or more monomers selected from the group consisting of (meth) acrylate, (meth)acrylonitrile, aromatic vinyl compound, vinyl acetate, halogenated vinyl compound, and halogenated vinylidene compound.

5. The method of claim 1, wherein the chopping of the step 2 is performed by passing the water-containing gel polymer through a chopper die having a plurality of holes with a diameter of 16 mm to 24 mm.

6. The method of claim 1, wherein the pulverization of the step 4 is performed by a multi-stage pulverization, and includes the steps of performing a primary pulverization of the dried water-containing gel polymer by passing the same through a screen having a mesh of 4 mm or more (step 4-1); and

performing a secondary pulverization of the water-containing gel polymer having a reference particle size or larger among the primarily pulverized water-containing gel polymers by passing the same through a screen having a mesh of less than 4 mm (step 4-2).

7. The method of claim 6, wherein the reference particle size is 850 $\mu$m or more in the secondary pulverization of the step 4-2.

8. The method of claim 1, wherein the base polymer particles have a vortex absorption rate of 33 seconds or less.

9. The method of claim 1, wherein particles having a particle size of less than 150 $\mu$m among the base polymer particles is 30% by weight or less.

10. The method of claim 1, further comprising the step of crosslinking a part of the surface of the base polymer particles by heat-treating the base polymer particles in the presence of a surface crosslinking agent (step 5).

[Fig. 1]

Comparative Example 8          Example 1          Example 3

[Fig. 2]

Comparative Example 7          Example 3

## INTERNATIONAL SEARCH REPORT

| International application No. |
| --- |
| **PCT/KR2024/019298** |

| A. | CLASSIFICATION OF SUBJECT MATTER |
| --- | --- |

**C08J 9/20**(2006.01)i; **C08J 3/24**(2006.01)i; **C08J 3/12**(2006.01)i; **C08J 9/14**(2006.01)i; **C08F 2/44**(2006.01)i; **C08F 20/06**(2006.01)i; **C08K 9/10**(2006.01)i; **C08K 5/1515**(2006.01)i

According to International Patent Classification (IPC) or to both national classification and IPC

| B. | FIELDS SEARCHED |
| --- | --- |

Minimum documentation searched (classification system followed by classification symbols)

C08J 9/20(2006.01); A61F 13/15(2006.01); A61F 5/44(2006.01); C08F 2/01(2006.01); C08F 20/00(2006.01); C08F 216/06(2006.01); C08J 3/075(2006.01); C08J 3/12(2006.01); C08J 3/24(2006.01); C08J 9/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent resin), 아크릴산계 단량체(acrylic acid monomer), 발포제(foaming agent), 캡슐(capsule), 분급(sieving), 분쇄(pulverization), 건조(drying)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2023-0097595 A (LG CHEM, LTD.) 03 July 2023 (2023-07-03) <br> See paragraphs [0026]-[0147]; claims 1-3; and example 1. | 1-10 |
| A | KR 10-2019-0077541 A (NIPPON SHOKUBAI CO., LTD.) 03 July 2019 (2019-07-03) <br> See claims 1, 5 and 6. | 1-10 |
| A | JP 11-318977 A (UNI HARTS KK) 24 November 1999 (1999-11-24) <br> See paragraphs [0009] and [0010]. | 1-10 |
| A | EP 3757153 A1 (LG CHEM, LTD.) 30 December 2020 (2020-12-30) <br> See claims 1-6. | 1-10 |
| A | KR 10-2016-0149237 A (SONGWON INDUSTRIAL CO., LTD.) 27 December 2016 (2016-12-27) <br> See claims 1-6. | 1-10 |

☐ Further documents are listed in the continuation of Box C.      ☑ See patent family annex.

| | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 March 2025** | **07 March 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/019298**

| Patent document cited in search report | | | Publication date (day/month/year) | Patent family member(s) | | | Publication date (day/month/year) |
|---|---|---|---|---|---|---|---|
| KR | 10-2023-0097595 | A | 03 July 2023 | None | | | |
| KR | 10-2019-0077541 | A | 03 July 2019 | CN | 109996833 | A | 09 July 2019 |
| | | | | CN | 109996833 | B | 11 February 2022 |
| | | | | CN | 109996835 | A | 09 July 2019 |
| | | | | CN | 109996835 | B | 29 July 2022 |
| | | | | EP | 3543279 | A1 | 25 September 2019 |
| | | | | EP | 3543279 | A4 | 19 August 2020 |
| | | | | EP | 3543280 | A1 | 25 September 2019 |
| | | | | EP | 3543280 | A4 | 02 September 2020 |
| | | | | JP | 2019-052285 | A | 04 April 2019 |
| | | | | JP | 2019-092863 | A1 | 17 October 2019 |
| | | | | JP | 2019-092864 | A1 | 17 October 2019 |
| | | | | JP | 6800998 | B2 | 16 December 2020 |
| | | | | JP | 6913107 | B2 | 04 August 2021 |
| | | | | JP | 6918407 | B2 | 11 August 2021 |
| | | | | KR | 10-2019-0077540 | A | 03 July 2019 |
| | | | | KR | 10-2560352 | B1 | 28 July 2023 |
| | | | | KR | 10-2560354 | B1 | 28 July 2023 |
| | | | | US | 11465126 | B2 | 11 October 2022 |
| | | | | US | 11766659 | B2 | 26 September 2023 |
| | | | | US | 2019-0329219 | A1 | 31 October 2019 |
| | | | | US | 2019-0329220 | A1 | 31 October 2019 |
| | | | | WO | 2018-092863 | A1 | 24 May 2018 |
| | | | | WO | 2018-092864 | A1 | 24 May 2018 |
| JP | 11-318977 | A | 24 November 1999 | EP | 0958801 | A1 | 24 November 1999 |
| | | | | EP | 0958801 | B1 | 08 September 2004 |
| | | | | JP | 3909953 | B2 | 25 April 2007 |
| | | | | KR | 10-0623465 | B1 | 18 September 2006 |
| | | | | KR | 10-1999-0088219 | A | 27 December 1999 |
| | | | | US | 2002-0056516 | A1 | 16 May 2002 |
| | | | | US | 6811642 | B2 | 02 November 2004 |
| EP | 3757153 | A1 | 30 December 2020 | CN | 111902463 | A | 06 November 2020 |
| | | | | CN | 111902463 | B | 18 April 2023 |
| | | | | EP | 3757153 | A4 | 21 April 2021 |
| | | | | EP | 3757153 | B1 | 07 June 2023 |
| | | | | JP | 2021-517603 | A | 26 July 2021 |
| | | | | JP | 7046413 | B2 | 04 April 2022 |
| | | | | KR | 10-2019-0114777 | A | 10 October 2019 |
| | | | | KR | 10-2417079 | B1 | 05 July 2022 |
| | | | | US | 11370856 | B2 | 28 June 2022 |
| | | | | US | 2021-0009725 | A1 | 14 January 2021 |
| | | | | WO | 2019-190120 | A1 | 03 October 2019 |
| KR | 10-2016-0149237 | A | 27 December 2016 | CN | 106232689 | A | 14 December 2016 |
| | | | | CN | 106232689 | B | 23 August 2019 |
| | | | | WO | 2015-163512 | A1 | 29 October 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230169689
- KR 1020240174002
- WO 1987003208 A

**Non-patent literature cited in the description**

- **REINHOLD SCHWALM**. UV Coatings: Basics, Recent Developments and New Application. Elsevier, 2007, 115
- **ODIAN**. Principle of Polymerization. Wiley, 1981, 203